# EUROPÄISCHE PATENTSCHRIFT

(11) **EP 3 190 932 B1**
(45) Veröffentlichungstag und Bekanntmachung des Hinweises auf die Patenterteilung: **28.12.2022**
(21) Anmeldenummer: 15787439.7
(22) Anmeldetag: 14.09.2015
(51) Int. Cl.: A47G 23/02

(54) **TRINKGEFÄSS MIT AUSGLEICHSKÖRPER**
DRINKING VESSEL COMPRISING A COMPENSATING BODY
RÉCIPIENT DE BOISSON À CORPS DE COMPENSATION

(30) Priorität: 13.09.2014 DE 202014007466 U; 18.09.2014 DE 202014104460 U
(43) Veröffentlichungstag der Anmeldung: 19.07.2017
(73) Patentinhaber: iuvas medical GmbH, 79108 Freiburg (DE)
(72) Erfinder: FEHRENBACH, David, 81539 München (DE); DENEMEC, Sinan, 80687 München (DE); KNOBLAUCH, Moritz, 80634 München (DE)
(74) Vertreter: Heilein, Ernst-Peter
(86) Internationale Anmeldenummer: PCT/DE2015/100392
(87) Internationale Veröffentlichungsnummer: WO 2016/037614

(56) Entgegenhaltungen:
- CN-A- 103 948 278
- CN-A- 103 948 278
- CN-U- 201 510 043
- CN-U- 202 104 666
- CN-U- 202 919 354
- CN-U- 202 932 577
- CN-U- 203 458 152
- CN-U- 203 458 152
- CN-U- 203 806 423
- CN-U- 203 806 423
- CN-Y- 201 360 844
- DE-U1-202004 001 835
- US-A1- 2013 112 578
- US-A1- 2013 112 578

## Beschreibung

Die vorliegende Erfindung bezieht sich auf ein Trinkgefäß zur Aufnahme einer zum Verzehr geeigneten Flüssigkeit, wie insbesondere ein Glas, eine Tasse oder ein Becher, bestehend aus einem Trinkbehälter mit einem Änderungen des Flüssigkeitsstandes (S) im Trinkbehälter ausgleichenden Körper.

Viele Patienten können ihren Kopf nur noch bedingt nach hinten abwinkeln und ab einer bestimmten Füllmenge typische Trinkgefäße wie Tassen, Becher oder Gläser nicht mehr austrinken. Kann ein Patient seinen Kopf nach hinten neigen und überstrecken, so steigt die Gefahr des Verschluckens erheblich, da die Atemwege frei liegen. In Notfallsituationen macht man sich dies zu Nutze und erreicht durch das Überstrecken die lebensrettenden freien Atemwege.

Jedoch birgt das Überstrecken des Kopfes in anderen alltäglichen Situationen, wie zum Beispiel beim Trinken mit einem Schnabelbecher, ein hohes Risiko eines Eindringens von Flüssigkeit in die Atemwege (sog. Aspiration). In der alltäglichen Praxis eines Krankenhauses, kann man das Phänomen des Verschluckens immer dann beobachten, wenn ein Patient versucht mithilfe eines üblichen Schnabelbechers zu trinken. Wie man in diesen Situationen regelmäßig beobachten kann, muss eine aus einem üblichen Schnabelbecher trinkende Person ihren Kopf weit nach hinten kippen um den Becher zu leeren. Für Personen, die zum Beispiel zusätzlich eine Dysphagie (Schluckstörung) besitzen, ist hier die Gefahr einer Aspiration enorm hoch. Zudem sind die bekannten Becher meistens bunt gefärbt, sodass der Flüssigkeitsstand schlecht erkennbar ist. Häufig ist auch zu beobachten, dass Patienten, sobald sie den Becher nur leicht gekippt haben und noch keine Flüssigkeit wahrnehmen, anfangen wie an einem Strohhalm zu ziehen. Durch das sog. "Luft ziehen", das weitere Kippen des Bechers und dem gleichzeitigen Überstrecken des Kopfes ist eine Aspiration vorprogrammiert. Je leerer der Becher wird, desto mehr müssen die Betroffenen ihren Kopf überstrecken. Folglich erhöht sich dadurch die Gefahr einer Aspiration.

Die Folgen einer Aspiration sind in den meisten Fällen Lungenentzündungen (sog. Pneumonie) und längere Liegezeiten in den Krankenhäusern. Bei jungen vitalen Menschen löst eine Aspiration sicherlich nicht sofort eine Pneumonie aus, jedoch sind heutzutage die Patienten im Krankenhaus häufig hochaltrig und/oder multimorbid.

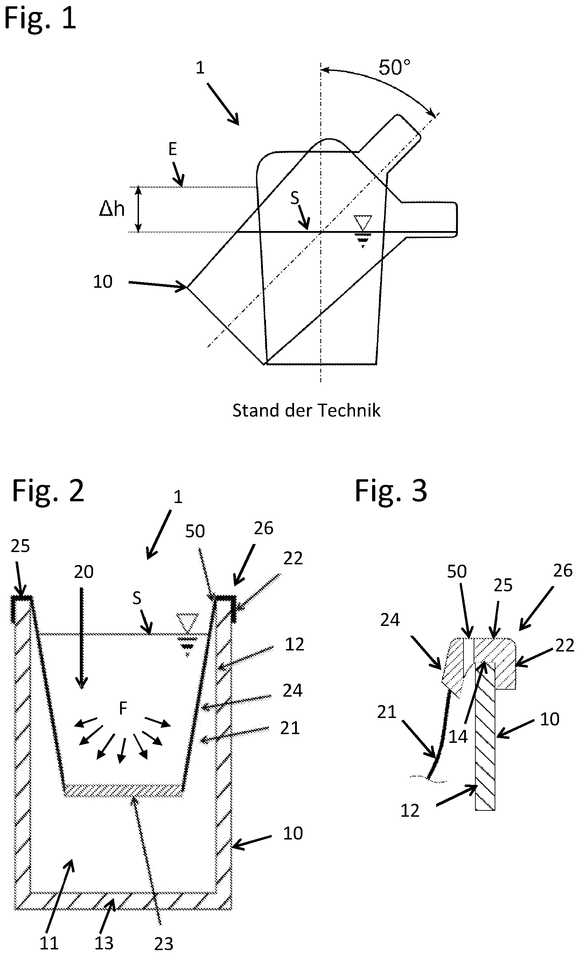

Handelsübliche Schnabelbecher müssen beim Trinkvorgang also sehr stark geneigt werden. Liegt der Flüssigkeitsstand (S) nur geringfügig um ein Δh unter dem Eichmaß (E), so sind bereits Kippwinkel von 50° und mehr zu erwarten (siehe Fig. 1).

Herkömmliche Trinkhilfen insbesondere für hochaltrige und/oder multimorbide und/oder Personen mit Schluckstörungen und/oder damit verbundenen Aspirationen beschränken sich jedoch weitestgehend auf die Modifikation der Trinkgefäßform. In DE 20 2004 001 835 U1 beispielsweise ist ein Trinkbecher thematisiert, der die vollständige Entleerung der Trinkflüssigkeit durch eine Abschrägung der Wandung erleichtern soll. Dies stellt keine befriedigende Lösung dar. Vielmehr wäre es wünschenswert, wenn der Kippwinkel auf ein geringes Maß beschränkt werden könnte.

Im Wesentlichen bestehen nämlich zwei Hauptprobleme bei kranken und/oder alten Personen bezüglich des Trinkens. Zum einen erhöht sich die Gefahr einer Aspiration, je weiter der Kopf nach hinten abgewinkelt wird. Versucht eine Person mit einer zusätzlichen Schluckstörung ein Trinkgefäß vollständig zu leeren, steigt das Risiko einer Aspiration beträchtlich, da der Kopf mit sinkendem Flüssigkeitsniveau kontinuierlich weiter nach hinten abgewinkelt wird.

Zum anderen können diese Personen in ihrer Bewegungsfreiheit derart eingeschränkt sein, dass ein vollständiges Entleeren der Trinkflüssigkeit nicht mehr möglich ist. Die natürliche Trinkbewegung kann beispielsweise durch eine mangelnde Handgelenksrotation, Arthrose im Schulter- bzw. Nackenbereich oder ein erschwertes Abwinkeln des Kopfes (Hals-Wirbelsäulen-Symptome) nicht mehr zufriedenstellend realisiert werden.

In den Pflegeeinrichtungen und auch in der häuslichen Pflege kommt es daher häufig vor, dass die Betroffenen das Trinkgefäß nicht mehr vollständig leeren. Um eine Dehydration der Patienten zu verhindern, schenkt das Pflegepersonal regelmäßig Flüssigkeit in die Trinkgefäße nach, sodass die Betroffenen kontinuierlich Flüssigkeit durch Trinken aufnehmen können. Eine konventionelle Trinkhilfe wie beispielsweise der in Fig. 1 dargestellte Schnabelbecher beugt lediglich einem Verschütten der Trinkflüssigkeit vor, löst aber nicht die oben genannten wesentlichen Probleme.

Zur Vermeidung dessen sind beispielsweise in der CN 201 510 043 U, der CN 202 104 666 U oder CN 203 458 152 U gattungsbildende Trinkgefäße vorgeschlagen bestehend aus einem Trinkbehälter mit einem Änderungen des Flüssigkeitsstandes (S) ausgleichenden Körpers. Die bekannten Ausgleichskörper haben zum Nachteil, dass diese gleit-dichtend gegenüber der Innenwand des Trinkbehälters ausgebildet sein müssen, was per se aufwändig ist und je nach Auslegung die Gängigkeit und damit die Funktionalität des Ausgleichskörpers insbesondere beim schräghaltenden Trinken hemmen kann. So hat sich in Tests der Erfinder gezeigt, dass ein Benutzer den Trinkbehälter erst abstellen muss, damit ein gleit-dichtend ausgebildeter Ausgleichskörper den Flüssigkeitsstand (S) wieder einpendeln kann. Ein gleit-dichtend ausgebildeter Ausgleichskörper lässt sich zudem mitunter nur schwerlich oder gar nicht entnehmen, was Probleme bei der gebotenen Reinigung und damit der Hygiene aufwirft. Außerdem ist von Nachteil, dass durch einen komprimierbaren Ausgleichskörper im Trinkbehälter ein Totvolumen bei der Befüllung des Trinkgefäßes entsteht, was die wünschenswerte korrekte Dokumentation aufgenommener Flüssigkeitsmengen insbesondere bei hochaltrigen und/oder multimorbid Nutzern erschwert.

Die CN 202 932 577 U offenbart ein Trinkgefäß bestehend aus einem Trinkbehälter mit einen Änderungen des Flüssigkeitsstandes im Trinkbehälter ausgleichenden Körper. Der aus starren Wandabschnitten faltenbalgartig ausgebildete Ausgleichkörper benötigt ersichtlich wenigstens eine Gleitbahn, entlang dieser ein teilweise aus dem Trinkbecker ragendes Führungselement führbar ist, mittels welchem der Ausgleichkörper in Abhängig des Flüssigkeitsvolumens manuell aus- und eingefaltet werden kann.

Die CN 201 360 844 Y offenbart einen Wasserbecher mit einstellbarem Volumen, bestehend aus einem äußeren Behälter und einem darin angeordneten inneren Behälter, welcher aus einem weichen Material gebildet wird. Der äußere Behälter umfasst zudem ein Aufblasloch, welches mittels eines Verschlusses abgedichtet werden kann. Der hier offenbarte Wasserbehälter dient dazu, verschiedene Wasserbehälter mit unterschiedlichen Volumina durch ein einziges Gefäß zu ersetzen und dadurch vorteilhaft Kosten und Müll einzusparen.

Die CN 202 919 354 U offenbart eine Sportflasche, die es ermöglicht, dass ein Sportler Wasser daraus trinken kann ohne den Flaschenkörper anheben zu müssen. Dazu wird hier ein elastischer Wassersack im Inneren des Flaschenkörpers vorgesehen, welcher mit der Flaschenöffnung verbunden ist.

Im Übrigen sie noch auf die CN 203 806 423 U, die US 2013/112578 A1 sowie die CN 103 948 278 A hingewiesen.

Der vorliegenden Erfindung liegt die Aufgabe zugrunde, ein die aus dem Stand der Technik bekannten Nachteile vermeidendes Trinkgefäß bereitzustellen.

Diese Aufgabe wird durch ein Trinkgefäß mit den Merkmalen gemäß Anspruch 1 gelöst.

Das erfindungsgemäße Trinkgefäß zur Aufnahme einer zum Verzehr geeigneten Flüssigkeit bestehend aus einem Trinkbehälter mit einem Änderungen des Flüssigkeitsstandes (S) im Trinkbehälter ausgleichenden Körper zeichnet sich dadurch aus, dass der Ausgleichskörper eine elastische Komponente umfasst, welche unter den Gewichtskräften (F) eines Flüssigkeitsvolumens seine Form, d.h. das Volumen des Ausgleichskörpers, vergrößert und bei Wegfall einwirkender Gewichtskräfte (F) den Ausgleichskörper in eine kleinere Ursprungsform zurückführt, und dadurch, dass der Ausgleichskörper zumindest aus der elastischen Komponente und aus einer Befestigungskomponente besteht. Zudem zeichnet sich das Trinkgefäß dadurch aus, dass es eine Belüftungsvorrichtung aufweist, wobei die Belüftungsvorrichtung einen durch den Ausgleichsbehälter geschaffenen Innenraum mit der Raumluft verbindet, sodass Luft in und aus dem Innenraum strömen kann, sobald der Ausgleichskörper seine Gestalt ändert, und wobei die Belüftungsvorrichtung als lediglich auf der Innenwand des Trinkbehälters ausgestaltete Belüftungsrillen und als Belüftungsrillen des Befestigungskomponente auf der Unterseite des Befestigungskomponente ausgebildet ist, wodurch die Luft im Innenraum des Trinkbehälters während des Befüll- und Trinkvorgangs über die Belüftungsrillen der Befestigungskomponente und über die Belüftungsrillen der Innenwand des Trinkbehälters entweichen kann.

Indem der Ausgleichskörper eine elastische Komponente umfasst, welche unter der Gewichtskraft (F) eines Flüssigkeitsvolumens die Volumenform des Ausgleichskörpers selbst vergrößert, bedarf es vorteilhaft keinerlei auf eine Gleitbewegung ausgelegten Abdichtung des Ausgleichskörpers gegenüber den Innenwänden des Trinkbehälters. Vielmehr wird bei Wegfall einwirkender Gewichtskräfte (F) der Ausgleichskörper selbst in seine kleinere Ursprungsform zurückgeführt. Der Benutzer muss den Trinkbehälter also nicht erst abstellen, damit sich der Flüssigkeitsstand (S) wieder einpendeln kann.

Vorteilhafte Aus- und Weiterbildungen, welche einzeln oder in Kombination Relevanz entfalten können, finden sich in den Unteransprüchen:
So weist in einer Weiterbildung die elastische Komponente des Ausgleichskörpers bevorzugt eine von der Gewichtskraft (F) des Flüssigkeitsvolumens abhängige Elastizität auf. Ein Ausgleichskörper mit einer von der Gewichtskraft (F) des Flüssigkeitsvolumens abhängigen elastischen Komponente hat zum Vorteil, dass dieser den "Wasserspiegel" der Trinkflüssigkeit im Trinkbehälter während des Trinkens auf einem konstanten horizontalen Niveau zu halten vermag.

Erfindungsgemäß bevorzugt ist der Ausgleichskörper als Einsatzkörper zum ganz oder teilweisen Einsetzen in den Trinkbehälter ausgebildet (im Folgenden kurz als "Einsatz" bezeichnet). Ein als Einsatz ausgebildeter Ausgleichskörper erleichtern vorteilhaft dessen Entnahme und Reinigung. Darüber hinaus hat ein als Einsatz ausgebildeter Ausgleichskörper eine Nachrüstbarkeit schon im Gebrauch befindlicher Trinkgefäße zum Vorteil.

Ein Ausgleichskörper mit elastischer Komponente ist also wesentlicher Bestandteil erfindungsgemäßer Trinkgefäße. Das zugrunde liegende physikalische Prinzip lässt sich mit der Umwandlung von Energie erklären. Wird der Trinkbehälter mit Flüssigkeit gefüllt, so ändert der bevorzugt als Einsatz ausgebildete Ausgleichskörper, nämlich die elastische Komponente dessen, seine Gestalt und wird gedehnt bzw. gestreckt, bedingt durch die Schwer- bzw. Gewichtskraft (F) der Flüssigkeit. Wird dem Trinkbehälter Flüssigkeit entnommen, kompensiert der Ausgleichskörper das daraus resultierende Absinken des Flüssigkeitspegels bzw. -standes (S) dadurch, dass der Ausgleichskörper wieder seine ursprüngliche Gestalt bzw. kleinere Ursprungsform anstrebt. Dies wird vorzugsweise durch die in der elastischen Komponente gespeicherte potentielle Energie realisiert. Diese Vorrichtung, d.h. der erfindungsgemäße Ausgleichskörper, hat den Vorteil, dass das Trinkgefäß bei einem deutlich verminderten Kippwinkel von nur 5° bis 20°, im Vergleich zu einem Trinkgefäß ohne einen solchen bevorzugt als Einsatz ausgebildeten Ausgleichskörper, vollständig geleert werden kann.

Die Elastizität der elastischen Komponente wird bevorzugt durch die Elastizität des Materials selbst realisiert. Beispielsweise kann die elastische Komponente bevorzugt ein Spritzgussbauteil aus einem Polymer sein.

In Weiterbildungen der Erfindung hat sich ein bevorzugt als Einsatz ausgebildeter Ausgleichskörper bewährt, welcher ganz oder teilweise aus folgenden Komponenten besteht: aus einer bodenartigen Komponente und/oder einer wandartig-elastischen Komponente und/oder einer, vorzugsweise bundförmigen, Befestigungskomponente, wobei bevorzugt zusätzlich noch eine deckelartige Komponente vorhanden sein kann. Die Komponenten können teilweise oder vollständig miteinander fusionieren, so dass ein kontinuierlicher als Einsatz ausgebildeter Ausgleichskörper entsteht. Außerdem können die Komponenten aus einem oder unterschiedlichen Materialien bestehen. In anderen Worten kann der bevorzugt als Einsatz ausgebildete Ausgleichskörper aus einem oder mehreren Materialien bestehen. Die Unterteilung in die Komponenten wurde vorgenommen, um das Verständnis bezüglich der Funktionsweise des bevorzugt als Einsatz ausgebildeten Ausgleichskörpers zu verdeutlichen.

Erfindungsgemäß bevorzugt ist eine Ausgestaltung bei der im Trinkbehälter an der Innenwand beginnende und den Mundrand übergreifend Belüftungsrillen ausgebildet sind, was u.a. zum Vorteil hat, dass keine Belüftungsrillen im Ausgleichskörper benötigt werden, was insbesondere dessen Herstellung auch aus dünnen Materialien vereinfacht.

Ein nach dieser technischen Lehre bevorzugt als Einsatz ausgebildeter Ausgleichskörper ist vorzugsweise rotationssymmetrisch gestaltet, weshalb die Vorrichtung, d.h. das Trinkgefäß mit Ausgleichskörper, vorteilhaft auch von alten oder kranken Personen stets nur in richtiger Weise selbstständig angewendet werden kann.

Des Weiteren vorzugsweise ist die Befestigungskomponente bevorzugt ringförmig gestaltet und ist diese bevorzugt mit dem Trinkbehälter formschlüssig, kraftschlüssig oder stoffschlüssig verbunden, oder der vorzugsweise als Einsatz ausgebildete Ausgleichskörper wird bevorzugt anderweitig, z.B. durch eine wulstförmige Randkomponente, im Trinkbehälter gehalten.

Die Befestigungskomponente kann bevorzugt mit dem oberen Rand des Trinkbehälters oder bevorzugt mit einem oberen Bereich der Innenwandung des Trinkbehälters verbunden sein.

Vorzugsweise sind die elastische Komponente, die Befestigungskomponente, die bodenartige Komponente, die wandartig-elastische Komponente und/oder vorzugsweise auch die deckelartige Komponente aus einem Material ausgebildet, so dass der vorzugsweise als Einsatz ausgebildete Ausgleichskörper in einer "kondomartigen" Struktur erhältlich ist, was die Einfachheit und auch Wirtschaftlichkeit dieser Ausgestaltung hervorhebt. Ein solcher, bevorzugt als Einsatz aus einem Material ausgebildeter Ausgleichskörper kann beispielsweise aus einem Polymer, wie beispielsweise Silikon oder einem thermoplastischen Elastomer, ausgebildet sein. Der so erhältliche Ausgleichskörper mit einer beispielsweise kondomartigen Struktur hat zudem zum Vorteil, dass dieser sich beim Befüllen mit einer zum Verzehr geeigneten Flüssigkeit vollständig in einen nahezu beliebig strukturierbaren Innenraum eines Trinkbehälters hinein-zu-dehnen vermag, ohne in diesem einen nennenswerten Totraum zu belassen, was vorteilhaft die korrekte Dokumentation aufgenommener Flüssigkeitsmengen insbesondere bei hochaltrigen und/oder multimorbid Nutzern erleichtert.

Der Trinkbehälter des Trinkgefäßes kann mit dem bevorzugt als Einsatz ausgebildeten Ausgleichskörper kraftschlüssig, formschlüssig oder stoffschlüssig verbunden sein. Vorzugsweise kann der Ausgleichkörper mit dem oberen Rand, der oberen Wandung, des Trinkbehälters verbunden sein. Beispielsweise kann der Trinkbehälter mit dem dazugehörigen Ausgleichskörper auch in einem Fertigungsverfahren, vorzugsweise durch Spritzguss, hergestellt werden.

Die Dokumentation aufgenommener Flüssigkeitsmengen kann in einer bevorzugten Weiterbildung durch ein Sensorelement zur Berechnung sich verändernder Flüssigkeitsmengen im Ausgleichskörper weiter verbessert. Ein solches Sensorelement erlaubt vorteilhaft eine IT-basierte, halb- oder vollautomatisierte Dokumentation der von Patienten aufgenommenen Trinkmengen, beispielsweise in der Gesundheitsakte eines Krankenhausverwaltungssystems. Darüber hinaus wären auch Informationen wie Erinnerungen und/oder Quittierungen an das Pflegepersonal oder den Patienten selbst, insbesondere über eine App, denkbar.

Das erfindungsgemäße Trinkgefäß wird im Folgenden anhand von Zeichnungen und Ausführungsbeispielen näher beschrieben. Die Ausführungsformen haben dabei lediglich beispielhaften Charakter und sind nicht als abschließende Aufzählung zu sehen. Die Merkmale des Trinkgefäßes können einzeln oder in Kombination verwendet werden.

Es zeigen schematisch:
- Fig. 1: eine aus dem Stand der Technik bekannte Schnabeltasse;
- Fig. 2: eine erste Ausführungsform eines erfindungsgemäßen Trinkgefäßes in einer Seitenansicht;
- Fig. 3: eine vergrößerte Darstellung der Belüftungsvorrichtung bzw. Belüftungsaussparung, bezugnehmend auf das Ausführungsbeispiel gemäß Fig. 2;
- Fig. 4: eine zweite Ausführungsform eines erfindungsgemäßen Trinkgefäßes in einer Seitenansicht, ähnlich wie in Fig. 1 aber einstückig hergestellt;
- Fig. 5: das Trinkgefäß analog Fig. 2 im leeren Zustand;
- Fig. 6: das Trinkgefäß aus Fig. 5 in einem gefüllten Zustand;
- Fig. 7: das Ausführungsbeispiel aus Fig. 5 und 6 in weiteren Gebrauchsstellungen;
- Fig. 8: eine dritte Ausführungsform eines erfindungsgemäßen Trinkgefäßes in einer perspektivischen Explosionsansicht umfassend einen Trinkbehälter, einem bevorzugt als Einsatz ausgebildeten Ausgleichskörper, und einem diesen überdeckenden Deckelelement;
- Fig. 9: das Ausführungsbeispiel aus Fig. 8 in einer formschlüssig verbundenen, mit einem Deckelelement abgedeckten Darstellung;
- Fig. 10: das Ausführungsbeispiel analog Fig. 9 in einer formschlüssig verbundenen, und mit einem Verschlusselement abgedeckten Darstellung;
- Fig. 11: die in den Fig. 8 bis 10 beschriebene Ausführungsform erweitert um einen im Behälterboden des Trinkbehälters angeordneten Sensor zur Berechnung sich im Trinkbehälter verändernder Flüssigkeitsstände (S) an Hand eines leeren Trinkbehälters;
- Fig. 12: zeigt die Ausführungsform aus Fig. 11 an Hand eines teilgefüllten Trinkbehälters 10.
- Fig. 13: einen Schaltplan eines den Sensor aus Fig. 11 umfassenden elektronischen bzw. mechatronischen Systems;
- Fig. 14: ein erstes Belüftungskonzept zur Belüftung der in den Fig. 8 bis 12 beschriebenen Ausführungsform, welches Belüftungskonzept kein Teil der vorliegenden Erfindung ist,
- Fig. 15: ein zweites Belüftungskonzept zur Belüftung der in den Fig. 8 bis 12 beschriebenen Ausführungsform;
- Fig. 16: ein drittes Belüftungskonzept zur Belüftung der in den Fig. 8 bis 12 beschriebenen Ausführungsform, welches Belüftungskonzept kein Teil der vorliegenden Erfindung ist, und
- Fig. 17: ein viertes Belüftungskonzept zur Belüftung der in den Fig. 8 bis 12 beschriebenen Ausführungsform, welches Belüftungskonzept kein Teil der vorliegenden Erfindung ist.

Bei der nachfolgenden Beschreibung bevorzugter Ausführungsformen der vorliegenden Erfindung bezeichnen gleiche Bezugszeichen gleiche oder vergleichbare Komponenten.

**Fig. 1** zeigt eine aus dem Stand der Technik bekannte Schnabeltasse, wie diese bereits in der Beschreibungseinleitung ausführlich gewürdigt wurde.

**Fig. 2** zeigt in einer Seitenansicht ein erstes erfindungsgemäßes Trinkgefäß 1, bestehend aus einem Trinkbehälter 10 und einem vorzugsweise als Einsatz ausgebildeten Ausgleichkörper 20, der ganz oder teilweise in den Trinkbehälter 10 platziert werden kann.

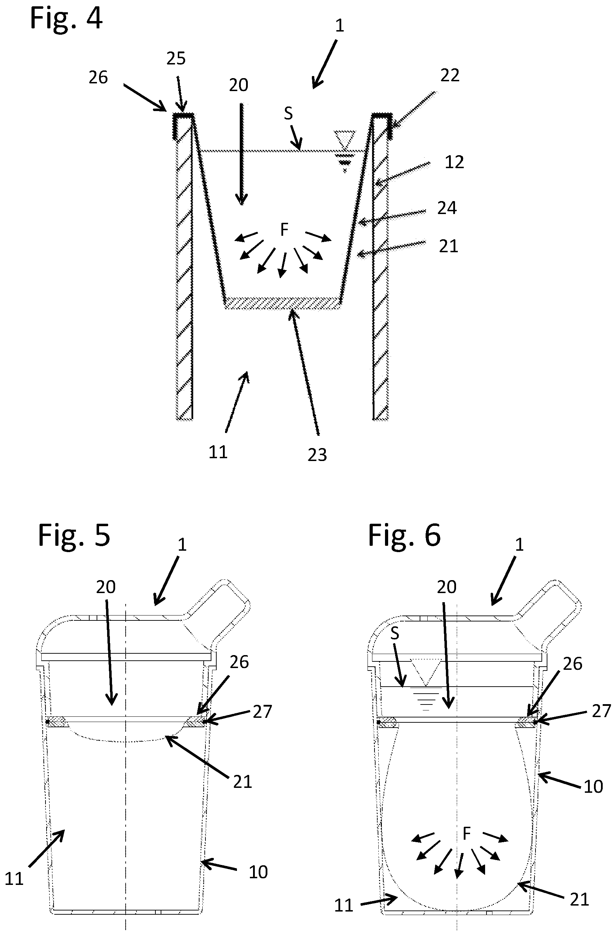

Wie in **Fig. 2** dargestellt kann der bevorzugt als Einsatz ausgebildete Ausgleichskörpers 20 eine bodenartige Komponente 23 haben, sowie eine Befestigungskomponente 22, wobei letztere bevorzugt kraftschlüssig, formschlüssig oder stoffschlüssig mit dem Trinkbehälter 10 verbunden werden kann. Der bevorzugt als Einsatz ausgebildete Ausgleichskörper 20 kann, beispielsweise wie in den **Fig. 5 bis 7** gezeigt, kraftschlüssig durch eine Presspassung zwischen der Befestigungskomponente 22 und dem Trinkbehälter 10, im Trinkbehälter 10 fixiert werden. Die elastische Komponente 21, welche in Gänze (wie in **Fig. 2** dargestellt) oder teilweise (nicht dargestellt) zugleich auch die wandartige Komponente 24 oder wie in **Fig. 5 bis 7** dargestellt zugleich auch ganz oder teilweise die bodenartige Komponente 23 mitbilden kann, befinden sich zwischen der bodenartigen Komponente 23 und einer deckelartigen Komponente 25 in vertikaler Richtung. Eine Belüftungsvorrichtung 50 verbindet den durch den bevorzugt als Einsatz ausgebildeten Ausgleichskörper 20 geschaffenen Innenraum 11 mit der Raumluft, sodass Luft in und aus dem Innenraum 11 strömen kann, sobald der Ausgleichskörper 20 seine Gestalt ändert.

**Fig. 2** zeigt also eine erste Ausführungsform eines erfindungsgemäßen Trinkgefäßes 1 mit einem bevorzugt als Einsatz ausgebildeten Ausgleichskörper 20, dessen Befestigungskomponente 22 mit dem oberen Mundrand 14, beziehungsweise mit dem oberen Bereich der Innenwandung 12 des Trinkbehälters 10 verbunden ist. Diese Verbindung kann kraftschlüssiger, formschlüssiger oder stoffschlüssiger Natur sein.

Aus der Seitenansicht in **Fig. 2** ist ersichtlich, dass der bevorzugt als Einsatz ausgebildete Ausgleichskörper 20 eine umlaufende ringförmige Randkomponente 26 aufweist. In vorliegendem erstem Ausführungsbeispiel sind ferner die elastische Komponente 21 und die wandartige Komponente 24 zu einer Komponente "fusioniert" ausgebildet. Der Übergang von der Befestigungskomponente 22, der wandartig-elastischen Komponente 24/21 zu der bodenartigen Komponente 23 ist vorzugsweise kontinuierlich ausgebildet. Im Bereich des Übergangs der Befestigungskomponente 22 zur wandartig-elastischen Komponente 24/21 ist eine Belüftungsaussparung 50 vorgesehen, insbesondere so, dass diese sich über dem mit einem dreieckförmigen Symbol gekennzeichneten Flüssigkeitsstandes S befindet. Das vorliegende, in **Fig. 2** gezeigte, Ausführungsbeispiel eines bevorzugt als Einsatz ausgebildeten Ausgleichskörpers 20 kann ganz oder teilweise aus einem Polymer, beispielsweise einem thermoplastischen Elastomer, ausgebildet sein und preiswert durch konventionellen Spritzguss hergestellt werden.

Wird der in **Fig. 2** dargestellte Trinkbehälter 10 mit Flüssigkeit gefüllt, so wird die elastische Komponente 21 auf Zug beansprucht. In vorliegendem Beispiel können die elastische Komponente 21, welche zugleich die wandartige Komponente 24 bildet, die Befestigungskomponente 22, die bodenartige Komponente 23, die deckelartige Komponente 25 sowie die Belüftungsvorrichtung 50 aus ein und demselben Material ausgebildet sein.

Des Weiteren ist die Befestigungskomponente 22 mit dem oberen Mundrand 14, beziehungsweise mit dem oberen Bereich der Innenwandung 12 des Trinkbehälters 10, bevorzugt formschlüssig verbunden. Der Übergang von der Befestigungskomponente 22, der wandartig-elastischen Komponente 24/21 zu der bodenartigen Komponente 23 ist bevorzugt kontinuierlich, wobei die Komponenten 22, 24/26, 23 aus einem Polymer ausgebildet sein können. Es bietet sich somit an, den bevorzugt als Einsatz ausgebildeten Ausgleichskörpers 20 durch Spritzguss herzustellen.

In **Fig. 3** ist eine vergrößerte prinzipielle Darstellung der zuvor bei **Fig. 2** erwähnten Belüftungsvorrichtung 50 bzw. Belüftungsaussparung ersichtlich. Erkennbar ist, wie die elastische Komponente 21 sich an der wandartigen Komponente 24 anschließen kann. Die Belüftungsvorrichtung 50 bzw. -aussparung ist im oberen Bereich des bevorzugt als Einsatz ausgebildeten Ausgleichskörpers 20 beziehungsweise in oder in der Nähe, d.h. benachbart, der deckelartigen Komponente 25 des bevorzugt als Einsatz ausgebildeten Ausgleichskörpers 20 vorzusehen, sodass die Belüftungsaussparung 50 stets über dem Flüssigkeitsniveau bzw. -stand S ist. Es versteht sich, dass die Belüftungsvorrichtung 50 bzw. -aussparung vorzugsweise dergestalt in der Befestigungskomponente 22 ausgebildet ist, dass keine Flüssigkeit in den Innenraum 11 des Trinkbehälters 10 gelangen oder der Trinkende die Belüftung mit seinem Mund verschließen kann.

**Fig. 4** zeigt eine zweite Ausführungsform eines erfindungsgemäßen Trinkgefäßes 1, bestehend aus einem nach dieser technischen Lehre ausgebildeten Trinkbehälter 10 mit einem Änderungen des Flüssigkeitsstandes S im Trinkbehälter 10 ausgleichenden Körper 20, wobei der Trinkbehälter 10 in **Fig. 4** gegenüber dem Trinkbehälter 10 aus Fig. 2 einen offenen Boden aufweist. Dadurch können der Trinkbehälter 10 und der Ausgleichskörper 20, stoffschlüssig verbunden, beispielsweise durch Spritzguss vorzugsweise in 2K, in einem Fertigungsschritt hergestellt werden und ohne dass es einer Belüftungsvorrichtung 50 bzw. Belüftungsaussparung bedarf, da der Innenraum 11 stets über den offenen Boden des Trinkbehälters 10 in Kontakt mit der Raumluft steht. Die elastische Komponente 21 des Ausgleichskörpers 20 ist dabei vorzugsweise so ausgelegt, dass bei hinreichender Füllung des Ausgleichskörpers 20 und Anheben des Trinkgefäßes 1 dieser 20 nicht aus der Bodenöffnung des Trinkbehälters 10 herausragt.

**Fig. 5** zeigt das Trinkgefäß 1 analog **Fig. 2** im leeren Zustand. Dargestellt ist, wie das Trinkgefäß 1 ein konventioneller Schnabelbecher (siehe **Fig. 1**) sein kann, in welchem ein als Einsatz ausgebildeter Ausgleichkörper 20 angeordnet ist. Der als Einsatz ausgebildete Ausgleichkörper 20 ist in diesem Ausführungsbeispiel über eine umlaufend ringförmige Randkomponente 26 mit dem der Innenwandung 11 des Trinkbehälters 10 des Schnabelbechers kraftschlüssig, beispielsweise über eine mittels Dicht- oder O-Ring 27 ausgebildeten Presspassung, verbunden. Das sich zur Mitte hin erstreckende elastische Material 21 stellt die elastische Komponente 21 dieser Ausführungsform dar. Das Trinkgefäß 1 ist in **Fig. 5** in einem leeren, nicht mit Flüssigkeit gefüllten Zustand, dargestellt.

**Fig. 6** zeigt das Trinkgefäß 1 aus **Fig. 5** in einem mit zum Verzehr geeigneten Flüssigkeit gefüllten Zustand. Dargestellt ist, wie die elastische Komponente 21 des als Einsatz ausgebildeten Ausgleichskörpers 20 durch das Gewicht F des Flüssigkeitsvolumens belastet und ausgeformt ist, wobei die elastische Komponente 21 sich in den Hohl- bzw. Innenraum 11 des Trinkbehälters 10 des Schnabelbechers erstreckt.

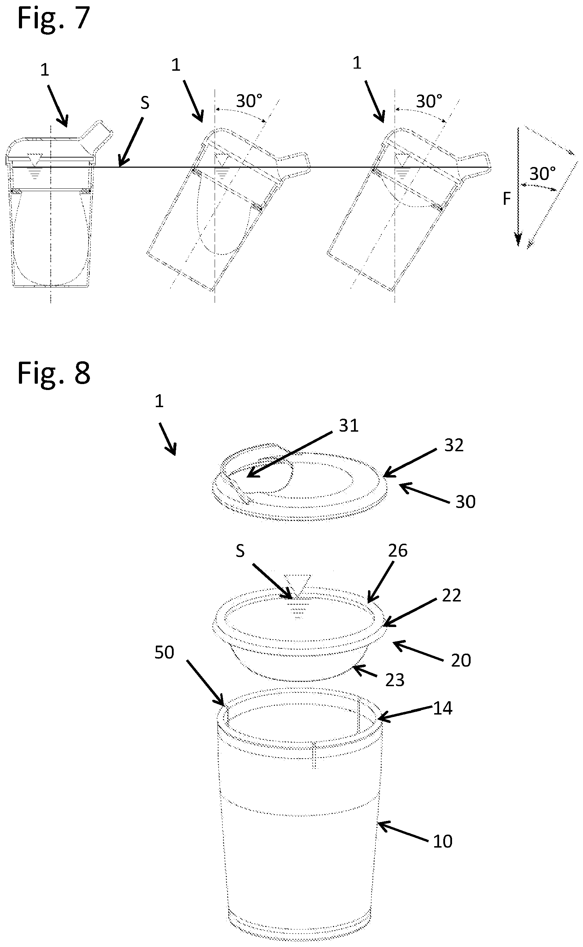

**Fig. 7** zeigt das Ausführungsbeispiel nach **Fig. 5** bzw. **Fig. 6** in weiteren Gebrauchsstellungen. Ein bevorzugt als Einsatz ausgebildeter Ausgleichskörper 20, welcher bevorzugt einer "kondomartigen" Struktur nachempfunden ist, kompensiert mit der passenden Elastizität den Flüssigkeitsverlust und somit den Abfall des Flüssigkeitsstands S. Die zum Verzehr geeignete Flüssigkeit (in ihrer Dichte vergleichbar mit Wasser) dehnt den als Einsatz ausgebildeten Ausgleichskörper 20. Wird das Volumen durch Trinken verringert, so gibt das daraus resultierende geringere Gewicht F des Flüssigkeitsvolumens die Rückführung des Ausgleichskörpers 20 in seine Ursprungsform weiter frei. Außerdem wird die wirkende Komponente der Gewichtskraft F auf die elastische Komponente 21 und damit auf den Ausgleichskörper 20 durch den Neigungswinkel verringert (Kraftdreieck). Der Flüssigkeitsspiegel bzw. -stand S hebt sich zusätzlich an, der zum Trinken erforderliche Kippwinkel wird nochmals reduziert.

**Fig. 8** zeigt in einer perspektivischen Explosionsansicht eine dritte Ausführungsform eines erfindungsgemäßen Trinkgefäßes 1, mit einem Trinkbehälter 10, einem bevorzugt als Einsatz ausgebildeten Ausgleichskörper 20, und einem diesen überdeckenden Deckelelement 30, in welchem bevorzugt eine für den menschlichen Mund ergonomisch günstige Mundöffnung 31 ausgebildet ist. Es versteht sich, dass die Mundöffnung 31 auch individuell ausgelegt sein kann oder bereits bewährte Mundöffhungen 31 adaptierbar sind.

Die Befestigungskomponente 22 sowie die daran angrenzende deckelartige Komponente 26 sind vorzugsweise ganz oder teilweise korrespondierend zu dem oberen Mundrand 14 des Trinkbehälters 10 ausgebildet, so dass diese vorzugsweise eine formschlüssige Verbindung des in diesem Ausführungsbeispiel bevorzugt als Einsatz ausgebildeten Ausgleichskörpers 20 mit dem Trinkbehälter 10 erlauben.

Das Deckelelement 30 wiederum weist einen ganz oder teilweise korrespondierend zur Befestigungskomponente 22 bzw. zu der daran angrenzenden deckelartigen Komponente 25 ausgebildeten Deckelrand 32 auf, welcher eine formschlüssige Verbindung des Deckelelements 30 mit dem bevorzugt als Einsatz ausgebildeten Ausgleichskörpers 20 erlaubt.

Die formschlüssigen Verbindungen haben eine einfach und reversibel handhabbare Montage und Demontage von Trinkbehälter 10, Ausgleichskörper 20 sowie Deckelelement 30 zum Vorteil, beispielsweise zu Reinigungszwecken.

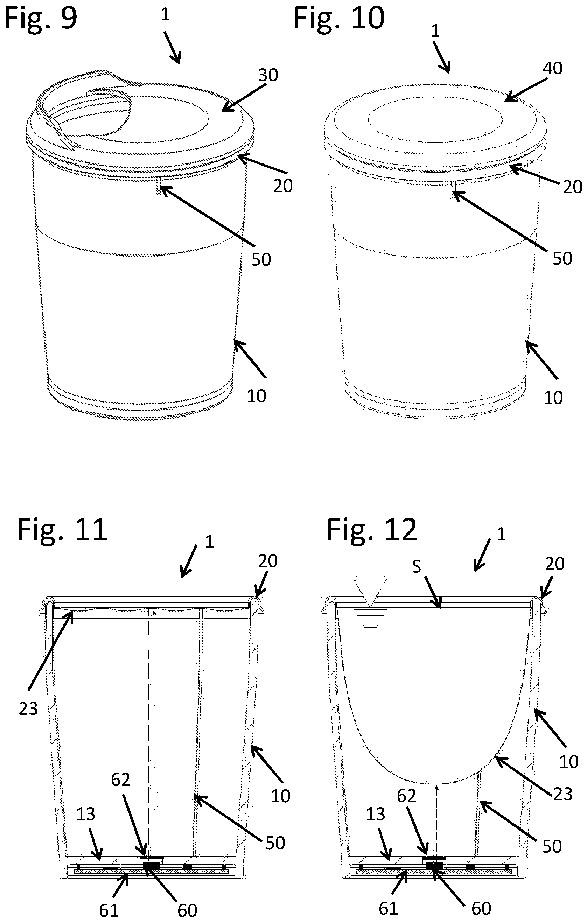

**Fig. 9** zeigt die Ausführungsform gemäß **Fig. 8** in einer formschlüssig verbundenen, mit einem Deckelelement 31 abgedeckten Darstellung;

Darüber hinaus gestatten formschlüssige Verbindungen beispielsweise auch, an Stelle des Deckelelementes ein Verschlusselement 40 formschlüssig auf die Befestigungskomponente 22 bzw. der daran angrenzenden deckelartigen Komponente 25 aufzusetzen, womit ein Trinkgefäß 1 bereitgestellt ist, welches vorteilhaft auch für Unterwegs verwendet finden kann. Ein solches "to-go"-Trinkgefäß 10 zeigt beispielhaft **Fig. 10** - wobei vorsorglich angemerkt sei, dass natürlich auch dergestalt ausgestaltete Verschlusselemente 40 denkbar sind, welche das Deckelelement 30 nebst Mundöffnung 31 mit sichern (nicht dargestellt).

**Fig. 11** zeigt die in den **Fig. 8 bis 10** beschriebene Ausführungsform erweitert um ein im Behälterboden 13 des Trinkbehälters 10 angeordnetes Sensorelement 60 zur Berechnung sich im Trinkbehälter 10 verändernder Flüssigkeitsstände (S) an Hand eines leeren Trinkbehälters 10.

**Fig. 12** zeigt die Ausführungsform aus **Fig. 11** an Hand eines teilgefüllten Trinkbehälters 10.

Der Mensch kann rund einen Monat ohne Nahrung überleben, aber höchstens fünf bis sieben Tage, ohne zu trinken. Deshalb: Für die menschliche Gesundheit ist das richtige und ausreichende Trinken am Tag mindestens ebenso wichtig wie die richtige Ernährung.

Der menschliche Körper besteht zu etwa zwei Dritteln aus Wasser. Wasser ist eine geschmack- und geruchlose, durchsichtig klare und farblose Flüssigkeit, die aus zwei Wasserstoffatomen (H) und einem Sauerstoffatom (O) besteht. Wasser dient zum einen als Transportmittel für beispielsweise Blut, Harn, Schweiß, zum anderen als Lösungsmittel für fast alle Stoffe in der menschlichen Zelle.

Wasser regelt außerdem die Temperatur des Körpers, indem es dem Organismus durch Verdunstung an der Körperoberfläche Wärme entzieht (Schweiß). Der menschliche Körper scheidet täglich große Mengen an Flüssigkeit aus. Zur Aufrechterhaltung eines optimalen Flüssigkeitsniveaus müssen diese Verluste immer wieder ausgeglichen werden. Ein Teil des Flüssigkeitsbedarfes wird durch die Nahrung gedeckt. Zusätzlich sollten erwachsene Menschen etwa 2 Liter Wasser trinken pro Tag.

Zwar kann der Körper bis zu einem gewissen Maß einen Wassermangel durch Konzentrationsprozesse ausgleichen, doch dann schadet ein Flüssigkeitsdefizit dem menschlichen Organismus.

Da Wasser auch Hauptbestandteil des Blutes ist, kann dieses nicht mehr richtig fließen, wenn man zu wenig trinkt. Der gesamte Körper wird schlechter versorgt, die Gehirnleistung und Konzentrationsfähigkeit lassen nach. Bei Flüssigkeitsmangel steigt außerdem die Gefahr von Nierensteinerkrankungen, Harnwegsinfektionen oder Verstopfungen, Haut und Schleimhäute trocknen ebenfalls aus - Viren und Bakterien haben dann ein leichteres Spiel, in den Körper zu gelangen.

Wissenschaftliche Untersuchungen ergaben, dass ein Wasserverlust von bereits 2 % des Körpergewichts die Leistungsfähigkeit deutlich beeinträchtigt. Deshalb sollte man auf die Warnsignale des Körpers hören: Kopfschmerzen, Übelkeit, Mundtrockenheit, Durstgefühl oder auch Appetitlosigkeit.

Sowie der Mensch im Laufe seines Lebens altert, verändert sich auch sein Schlucksystem. Dessen Funktion kann durch regelmäßiges Trinken erhalten und trainiert werden. Die meisten Erwachsenen trinken aber zu wenig pro Tag. Diese Gewohnheit nimmt im Alter zu und kann zu handfesten Problemen führen: Austrocknen der Schleimhäute, Zahnverlust, Muskelabbau und Versteifung der Kiefergelenke führen dazu, dass der Schluckreflex nur noch unkoordiniert funktioniert. Mitunter wird das Problem durch eine beginnende oder bestehende Schluckstörung verschärft und bei den Betroffenen besteht die Gefahr einer Aspiration und in der Folge die einer Pneumonie.

Der Nachweis (Dokumentation) der insbesondere an hochaltrigen und/oder multimorbiden Menschen vergebenen Flüssigkeitsmengen erfolgt in einem gewöhnlich handvermerkten Trinkprotokoll. Trotz dessen oder gerade deswegen stellt die Sicherstellung einer Versorgung von hochaltrigen und/oder multimorbid Menschen mit der für sie erforderlichen Menge an Flüssigkeit die Pflegenden mitunter vor große Probleme. Veränderungen als Folge des Alters, wie die Abnahme des Durstgefühls, können von orientierten Menschen kompensiert werden. Hochaltrigen und/oder multimorbiden Menschen aber fehlt häufig diese Fähigkeit und sie können sich nicht mehr selbst zum Trinken motivieren. Die Motivation muss daher von den Pflegenden kommen.

Dem vorstehenden liegt, gleich ob in Verbindung mit dem Ausgleichskörper 20 oder unabhängig davon, die Teilaufgabe zugrunde, ein die aus dem Stand der Technik bekannten Nachteile vermeidendes Trinkgefäß 1 bereitzustellen.

Ein diese Teilaufgabe lösendes Trinkgefäß 1 zur Aufnahme einer zum Verzehr geeigneten Flüssigkeit zeichnet sich durch einen Trinkbehälter 10 mit einem Sensorelement 60 zur Berechnung sich im Trinkbehälter 10 verändernder Flüssigkeitsstände S aus.

In einer Weiterbildung ist vorgeschlagen, dass das Sensorelement 60 Teil eines elektronischen bzw. mechatronischen Systems 61 (im Folgenden elektronisches System, kurz: ES) ist.

Derart integriert kann das Sensorelement 60 die erhobenen Daten bevorzugt über eine Schnittstelle beispielsweise an Peripheriegeräte liefern, die sich je nach Anwendungsbereich unterscheiden können, und ggf. auch zum Beispiel Teil eines Krankenhausverwaltungssystems sein können.

Die im Regelfall ermöglichte Auswertung der Daten erst innerhalb eines Peripheriegeräts hat zum Vorteil, die Komplexität des Systems 61 möglichst gering halten zu können.

Wie in den Fig. 11 und 12 dargestellt, ist bevorzugt, das Sensorelement 60 oder das dieses umfassende System 61 im Behälterboden 13 des Trinkbehälters 10 anzuordnen.

Erfindungsgemäß bevorzugt hat sich ein Sensorelement 60 bewährt, welches ein Abstandsmesser auf Infrarotbasis ist. Dabei wird ein Infrarot-Impuls ausgesandt, der durch die Flüssigkeit im Trinkbehälter 10 an der Flüssigkeitsoberfläche oder an der unteren Fläche des Ausgleichskörpers 20 reflektiert und wieder zum Sensorelement 60 zurückgeschickt wird. Das Sensorelement 60 misst die für diesen Weg benötigte Zeit und errechnet daraus den Füllstand. Hierbei muss der Reflexionsgrad der Oberfläche nur 3 % betragen. Da mittels Infrarot gemessen wird, ist auch die Dichte der Flüssigkeit irrelevant für eine korrekte Messung.

Prinzipiell sind zwei Szenarien zu betrachten, innerhalb der das System zum Einsatz kommen kann:
Die Anwendung mit dem als Einsatz ausgebildeten Ausgleichskörper 20 sowie die Anwendung in einem Trinkbehälter 10 ohne eine solche Ausgleichshilfe. Bei erstgenannter Anwendung befindet sich das Flüssigkeitsmedium auf der dem Sensorelement 60 abgewandten Seite. Im Gegensatz dazu läuft beim Szenario ohne den Einsatz der IR-Impuls durch das Flüssigkeitsmedium hindurch.

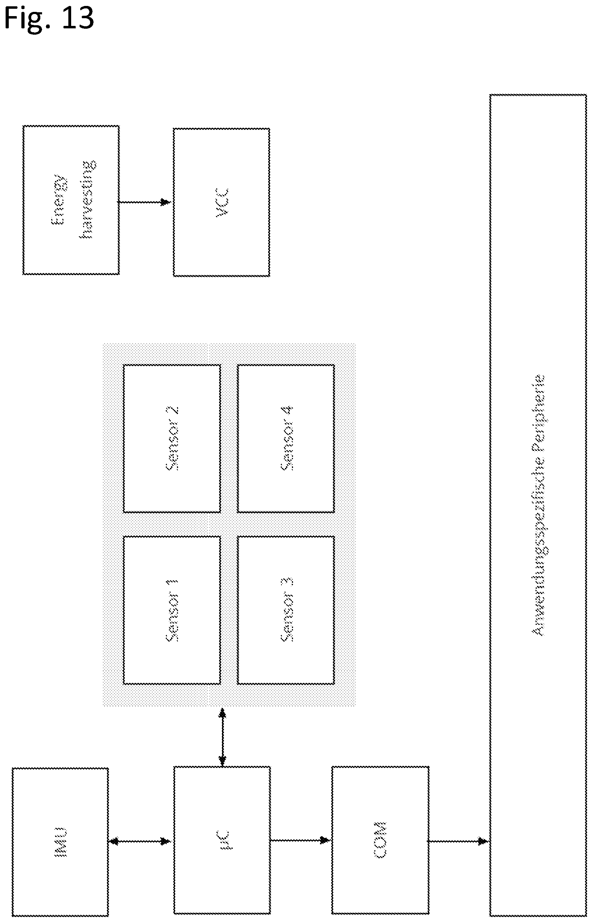

**Fig. 13** zeigt einen Schaltplan eines das Sensorelement 60 aus **Fig. 11 und 12** umfassenden elektronischen bzw. mechatronischen Systems 61.

Wie darin ersichtlich können alternativ oder kumulativ weitere Sensoren zum Einsatz kommen:
Triangulationssensoren messen Abstände über den Reflexionswinkel an der Grenzfläche. Mittels eines Photodiodenarrays wird der Ort des Auftreffens des Reflektierten Lichtimpuls bestimmt und auf den Abstand der Grenzfläche umgerechnet.

Prinzipiell sind auch Ultraschallsensoren denkbar: Sie messen nach demselben Prinzip wie IR-Sensor.

Magnetische und induktive Sensoren könnten für die ein oder andere Produktvariante interessant sein und dann an einer Außenwand des Trinkbehälters 10 befestigt werden.

Das System 61 besteht zumindest aus einem Sensorelement 60, einer Spannungsversorgung (VCC), einem Mikrocontroller (µC) und einer Kommunikationsschnittstelle (COM).

Um die erhobenen Daten zu übersenden und auszuwerten bedarf es einer Kommunikationsschnittstelle. Diese kann zweckmäßiger Weise eine Funkverbindung darstellen. Damit entfällt vorteilhaft die Notwendigkeit, das System 61 mittels einer Kabelverbindung an die gewünschte Peripherie anzuschließen.

Vorzugsweise wahlweise kann eine Verbindung über WLAN, Mobilfunk, Richtfunk, Bluetooth oder RFID aufgebaut werden.

Um sensorseitiges Messrauschen zu eliminieren ist eine geeignete Filterauswahl getroffen. Falls klassische Filterkonzepte scheitern, wird vorgeschlagen, mehrere Sensoren zu betreiben, um ein Signal mittels stochastischem Filter glätten zu können.

Um eine Fehlinterpretation von Störeinflüssen aus der Umwelt wie z.B. das Tragen oder Verschütten des Trinkgefäßes 10 auszuschließen wird vorgeschlagen, einen Beschleunigungssensor (IMU) vorzusehen, der nur Ereignisse berücksichtigt, die Innerhalb einer bestimmten Neigung des Behälters geschehen.

Vorzugsweise ist das Trinkgefäß 10 ohne und erst recht mit integrierter Sensorik spühlmaschinen- und wasserfest. Daher ist in einer Weiterbildung eine geeignete Einkapselung der elektronischen Komponenten 60, 61 vorgeschlagen. Als Alternative zu einem dann ausgeschlossenen Batterietausch werden Konzepte des sog. "Energy Harvesting" vorgeschlagen.

Weitere Möglichkeiten zu einem gleichwohl langlebigen Betrieb erfindungsgemäßer Produkte sind durch piezoelektrische, thermoelektrische und/oder photoelektrische Effekte denkbar.

Bei der erstgenannten Methode wird mittels Piezokeramik Bewegung in Elektrizität gewandelt. So kann Energie gewonnen werden, wenn das Trinkgefäß 1 bewegt wird. Mögliche Bewegungen sind z.B. ein Tragen oder Schütteln des Gefäßes 1.

Ebenso kann durch Temperaturunterschiede elektrische Energie gewonnen werden. Wenn man bedenkt, dass in einer gewerblichen Spülmaschine Temperaturen von bis zu 90 °C herrschen, gewinnt diese Methode an Bedeutung insb. bei gewerblicher Verwendung in Kliniken oder Pflegeheimen. Denkbar ist also, durch das tägliche Spülen des Trinkbehälters 10 in einer Spülmaschine eine Stromversorgung vom Sensorelement 60 und/oder dem elektronischen bzw. mechatronischen Systems 61 aufrecht zu erhalten.

Je nach Anwendungsbereich können unterschiedliche Interaktionskonzepte formuliert werden, weshalb nachfolgend einige Peripheriegeräte kurz beschrieben seien:
Für Kliniken und Pflegeheime kann die direkte Einspeisung der Daten in die elektronische Krankenakte sinnvoll sein. Dadurch entfällt der Dokumentationsaufwand, was eine enorme Zeitersparnis mit sich bringt. Auch die Patientensicherheit kann dadurch gesteigert werden. Bei nicht-Einhaltung der erforderlichen Trinkmenge kann beispielsweise ein Warnhinweis am Monitor der Stationsleitung ausgegeben werden.

Ein Armband, das vom System 61 die erhobenen Daten empfängt und auswertet, kann vor allem für den Privatanwender und für die häusliche Pflege ein interessantes Interaktionskonzept darstellen. Dabei kann beispielsweise direkt gewarnt oder erinnert werden. Eine altersgerechte Lösung für Pflegebedürftige ist ebenfalls denkbar.

Aber auch für den Privatanwender wäre es in diesem Hinblick sinnvoll eine Kompatibilität zu den Handelsüblichen Fitnessbändern und dergleichen zu erzielen. Dies kann insbesondere in Kooperation mit führenden Herstellern erreicht werden.

Neben dem Anwendungsbereich der häuslichen bzw. ambulanten Pflege wäre ein einleuchtendes Konzept die Bereitstellung der Daten über Email bzw. Web- Interface. Angehörige könnten so jeden Abend eine Email mit einer Trinkbilanzierung des Tages erhalten. Auch ambulante Pflegedienste könnten sich insbesondere mittels Passwort in eine Webmaske einloggen und die gewonnenen Daten herunterladen.

Schließlich dürften nicht nur für den Privatanwender eine direkte Kommunikation zu Smartphone oder Tabletts mittels App und beispielsweise Bluetooth interessant sein.

Ein Trinkgefäß 1 zur Aufnahme einer zum Verzehr geeigneten Flüssigkeit, bestehend aus einem Trinkbehälter 10 mit einem Sensorelement 60 zur Berechnung sich im Trinkbehälter 10 verändernder Flüssigkeitsstände S eignet sich gleichermaßen für Anwendungen in Kliniken, Pflegeheimen, in der ambulanten oder häuslichen Pflege sowie für Privatanwender.

Stellt man sich selbst die Frage, wie viel Flüssigkeit man seit dem morgendlichen Kaffee zu sich genommen hat, so kommt man oft zur Erkenntnis, dass es zu wenig war. Geschäftsmänner, Studenten, Kindergärtner, Ärzte, Fernfahrer oder Bauarbeiter sind nur ein kleiner Ausschnitt aus einem Anwenderkreis, der eine Gemeinsamkeit aufweist: Einen geschäftigen, abwechslungsreichen, stressigen und vor allem ortsunabhängigen Tagesablauf. Das Trinken wird dadurch häufig schlichtweg vergessen.

Das erfindungsgemäß bevorzugte Trinkgefäß 1 verschafft hier Abhilfe, indem es ein Lifestyle Produkt bereitstellt, dass mit Erinnerungen die Bereitschaft zu trinken fördert.

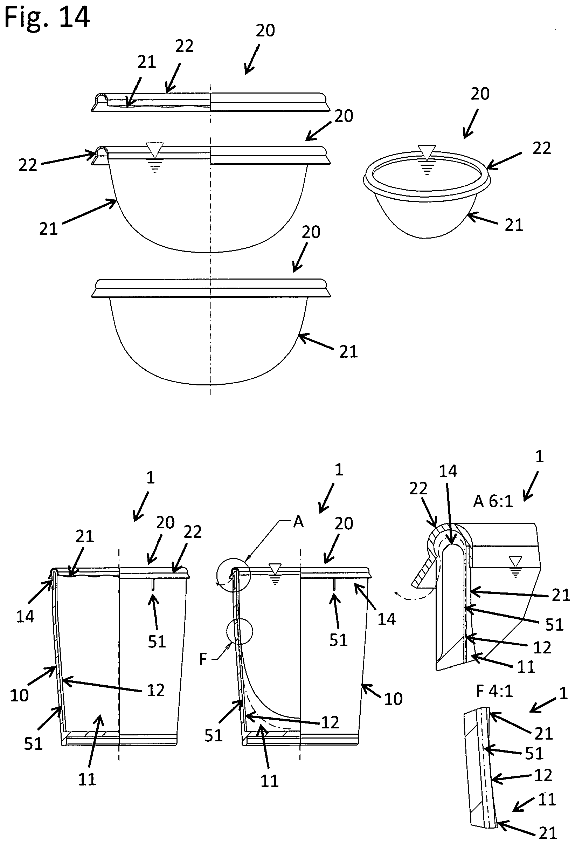

**Fig. 14** zeigt ein **erstes** Belüftungskonzept [A] zur Belüftung der in den **Fig. 8 bis 12** beschriebenen Ausführungsform, welches Belüftungskonzept kein Teil der vorliegenden Erfindung ist.

In der oberen Bildhälfte dargestellt ist der Ausgleichskörper 20 in verschiedenen Ansichten, Befüllungszuständen und Teilschnitten. Die Darstellung auf der linken Seite oben zeigt den Ausgleichskörper 20 in einer Seitenansicht im Halbschnitt in einem unbefüllten Zustand, wobei die elastische Komponente 21 des Ausgleichskörpers mit der Befestigungskomponente 22 verbunden ist.

Die Darstellung auf der linken Seite mittig zeigt den Ausgleichskörper 20 in einer Seitenansicht im Halbschnitt in einem befüllten Zustand, wobei die elastische Komponente 21 des Ausgleichskörpers mit der Befestigungskomponente 22 verbunden ist.

Die Darstellung auf der linken Seite unten zeigt den Ausgleichskörper 20 in einer Seitenansicht in einem befüllten Zustand, wobei die elastische Komponente 21 des Ausgleichskörpers mit der Befestigungskomponente 22 verbunden ist.

Auf der rechten Seite ist der mit einer zum Verzehr geeigneten Flüssigkeit befüllte Ausgleichskörper 20 ersichtlich, wobei die Befestigungskomponente 22 und die elastische Komponente 21 dargestellt sind.

In der unteren Bildhälfte ist auf der linken Seite ein nach dem Belüftungskonzept [A] ausgestaltetes erfindungsgemäßes unbefülltes Trinkgefäß 1 in einer Seitenansicht im Halbschnitt ersichtlich, mit einem Trinkbehälter 10, einem bevorzugt als Einsatz ausgebildeten Ausgleichskörper 20 bestehend aus Befestigungskomponente 22 und elastischer Komponente 21 sowie zur Belüftung des Innenraums 11 des Trinkbehälters 10 dienende Belüftungsrillen 51, die von der Innenwand des Trinkbehälters 12 über den Mundrand des Trinkbehälters 14 auf die Außenwand des Trinkbehälters verlaufen. Somit kann die Luft im Innenraum 11 des Trinkbehälters 10 während des Befüll- und Trinkvorgangs über die Belüftungsrillen 51 entweichen.

In der mittleren Darstellung ist ein erfindungsgemäßes befülltes Trinkgefäß 1 in einer Seitenansicht im Halbschnitt ersichtlich, mit einem Trinkbehälter 10, einem bevorzugt als Einsatz ausgebildeten Ausgleichskörper 20 sowie zur Belüftung des Innenraums 11 des Trinkbehälters 10 dienende Belüftungsrillen 51, die von der Innenwand des Trinkbehälters 12 über den Mundrand des Trinkbehälters 14 auf die Außenwand des Trinkbehälters verlaufen. Die Strichpunktlinie deutet den Ausströmvorgang der Luft aus dem Innenraum 11 des Trinkbehälters 10 an.

In der Darstellung auf der rechten Seite oben ist bezugnehmend auf die mittlere Darstellung Detailansicht A das Trinkgefäß 1 im Schnitt dargestellt. Die Strichpunktlinie deutet den Ausströmvorgang der im Innenraum 11 des Trinkbehälters 10 befindlichen Luft über die Belüftungsrille 51 an, welche sich von der Innenwand 12 des Trinkbehälters 10 über den Mundrand 14 des Trinkbehälters 10 auf die Außenwand des Trinkbehälters 10 erstreckt. Der Ausgleichskörper 20, bestehend aus der Befestigungskomponente 22 und der elastischen Komponente 21, ist formschlüssig mit dem Mundrand 14 des Trinkbehälters 10 verbunden.

In der Darstellung auf der rechten Seite unten ist bezugnehmend auf die mittlere Darstellung Detailansicht F das Trinkgefäß 1 im Schnitt dargestellt. Hier ist thematisiert, dass sich die elastische Komponente 21 des Ausgleichskörpers 20, während des Befüllvorgangs an die Innenwand des Trinkbehälters 12 schmiegen kann. Die Belüftungsrille 51 ermöglicht trotz dieses Umstandes das Entweichen von Luft aus dem Innenraum 11 des Trinkbehälters 10.

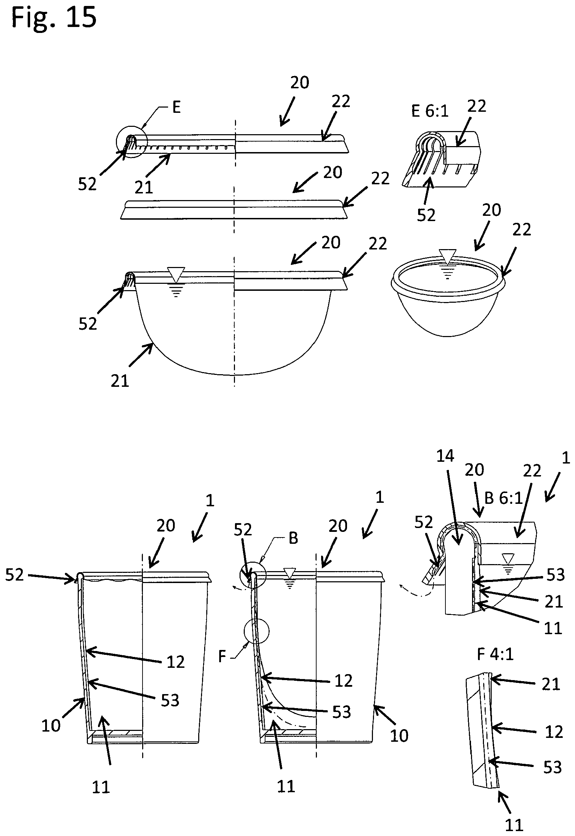

**Fig. 15** zeigt ein **zweites** Belüftungskonzept [B] zur Belüftung der in den **Fig. 8 bis 12** beschriebenen Ausführungsform , welches Belüftungskonzept Teil der vorliegenden Erfindung ist.

In der oberen Bildhälfte dargestellt ist der Ausgleichskörper 20 in verschiedenen Ansichten, Befüllungszuständen und Teilschnitten. Die Darstellung auf der linken Seite oben zeigt den Ausgleichskörper 20 in einer Seitenansicht im Halbschnitt in einem unbefüllten Zustand, wobei die elastische Komponente 21 des Ausgleichskörpers mit der Befestigungskomponente 22 verbunden ist. Des Weiteren sind Belüftungsrillen der Befestigungskomponente 52 auf der Unterseite der Befestigungskomponente 22 ersichtlich. Bezugnehmend auf diese Darstellung zeigt die Darstellung auf der rechten Seite oben die Detailansicht E, bei der in einem Schnitt die Belüftungsrillen der Befestigungskomponente 52 auf der Unterseite der Befestigungskomponente 22 ersichtlich sind.

Die Darstellung auf der linken Seite mittig zeigt den Ausgleichskörper 20 in einer Seitenansicht im Halbschnitt in einem unbefüllten Zustand, wobei nur die Befestigungskomponente 22 ersichtlich ist.

Die Darstellung auf der linken Seite unten zeigt den Ausgleichskörper 20 in einer Seitenansicht im Halbschnitt in einem befüllten Zustand, wobei die elastische Komponente 21 des Ausgleichskörpers mit der Befestigungskomponente 22 verbunden ist. Des Weiteren sind die Belüftungsrillen der Befestigungskomponente 52 ersichtlich.

Auf der rechten Seite unten ist der Ausgleichskörper 20 bestehend aus der Befestigungskomponente 22 und der elastischen Komponente 21 im teilbefüllten Zustand in einer perspektivischen Ansicht dargestellt.

In der unteren Bildhälfte ist auf der linken Seite ein nach dem Belüftungskonzept [B] ausgestaltetes erfindungsgemäßes unbefülltes Trinkgefäß 1 in einer Seitenansicht im Halbschnitt ersichtlich, mit einem Trinkbehälter 10, einem bevorzugt als Einsatz ausgebildeten Ausgleichskörper 20 sowie zur Belüftung des Innenraums 11 des Trinkbehälters 10 dienende Belüftungsrillen der Innenwand des Trinkbehälters 53, die lediglich auf der Innenwand 12 des Trinkbehälters 10 ausgestaltet sind, wodurch die Luft im Innenraum 11 des Trinkbehälters 10 während des Befüll- und Trinkvorgangs über die Belüftungsrillen der Befestigungskomponente 52 und über die Belüftungsrillen 53 der Innenwand 12 des Trinkbehälters 10 entweichen kann.

In der mittleren Darstellung ist ein erfindungsgemäßes befülltes Trinkgefäß 1 in einer Seitenansicht im Halbschnitt ersichtlich, mit einem Trinkbehälter 10, einem bevorzugt als Einsatz ausgebildeten Ausgleichskörper 20 sowie zur Belüftung des Innenraums 11 des Trinkbehälters 10 dienende Belüftungsrillen 53 der Innenwand 12 des Trinkbehälters 10, die lediglich auf der Innenwand 12 des Trinkbehälters 10 ausgestaltet sind. Die Luft kann so über die Belüftungsrillen 53 der Innenwand 12 des Trinkbehälters 10 und anschließend über die Belüftungsrillen 52 der Befestigungskomponente 22 entwichen. Die Strichpunktlinie deutet den Ausströmvorgang der Luft aus dem Innenraum 11 des Trinkbehälters 10 an.

In der Darstellung auf der rechten Seite oben ist bezugnehmend auf die mittlere Darstellung Detailansicht B das Trinkgefäß 1 im Schnitt dargestellt. Die Strichpunktlinie deutet den Ausströmvorgang der im Innenraum 11 des Trinkbehälters 10 befindlichen Luft über die Belüftungsrillen 53 der Innenwand 12 des Trinkbehälters 10 und über die Belüftungsrillen 52 der Befestigungskomponente 22 an. Der Ausgleichskörper 20, bestehend aus der Befestigungskomponente 22 und der elastischen Komponente 21, ist vorzugsweise formschlüssig mit dem Mundrand 14 des Trinkbehälters 10 verbunden.

In der Darstellung auf der rechten Seite unten ist bezugnehmend auf die mittlere Darstellung Detailansicht F das Trinkgefäß 1 im Schnitt dargestellt. Hier ist thematisiert, dass sich die elastische Komponente 21 des Ausgleichskörpers 20, während des Befüllvorgangs an die Innenwand 12 des Trinkbehälters 10 schmiegen kann. Die Belüftungsrille 53 der Innenwand 12 des Trinkbehälters 10 ermöglicht trotz dieses Umstandes das entweichen von Luft aus dem Innenraum 12 des Trinkbehälters 10.

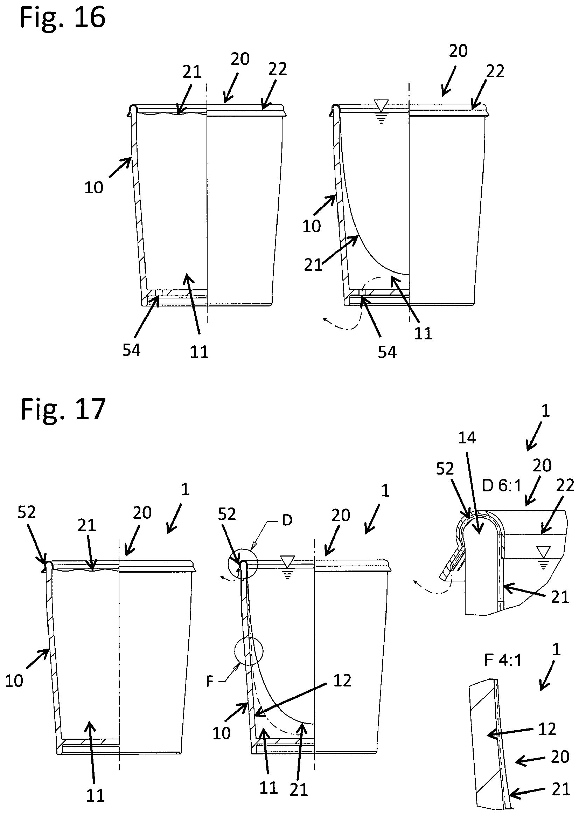

**Fig. 16** zeigt ein **drittes** Belüftungskonzept [C] zur Belüftung der in den **Fig. 8 bis 12** beschriebenen Ausführungsform, welches Belüftungskonzept kein Teil der vorliegenden Erfindung ist. Dargestellt ist der Trinkbehälter 10 mit formschlüssig aufgesetztem Ausgleichskörper 20 (links leer; rechts befüllt) in teilgeschnittenen Vorderansichten. Erkennbar ist, wie die Luft im Innenraum 11 des Trinkbehälters 10 über die Belüftungsaussparung 54 im Behälterboden 13 des Trinkbehälters 10 während des Befüll-und Trinkvorgangs entweichen kann. Des Weiteren sind die elastische Komponente 21 sowie die Befestigungskomponente 22 des Ausgleichskörpers 20 ersichtlich.

**Fig. 17** zeigt ein **viertes** Belüftungskonzept [D] zur Belüftung der in den **Fig. 8 bis 12** beschriebenen Ausführungsform, welches Belüftungskonzept kein Teil der vorliegenden Erfindung ist. Dargestellt ist der Trinkbehälter 10 mit formschlüssig aufgesetztem Ausgleichskörper 20 (links leer; rechts befüllt).

Auf der linken Seite ist ein nach dem Belüftungskonzept [D] ausgestaltetes erfindungsgemäßes unbefülltes Trinkgefäß 1 in einer Seitenansicht im Halbschnitt ersichtlich, mit einem Trinkbehälter 10, einem bevorzugt als Einsatz ausgebildeten Ausgleichskörper 20 sowie zur Belüftung des Innenraums 11 des Trinkbehälters 10 dienende Belüftungsrillen 52 der Befestigungskomponente 22.

In der mittleren Darstellung ist ein erfindungsgemäßes befülltes Trinkgefäß 1 in einer Seitenansicht im Halbschnitt ersichtlich, mit einem Trinkbehälter 10, einem bevorzugt als Einsatz ausgebildeten Ausgleichskörper 20 sowie zur Belüftung des Innenraums des Trinkbehälters 11 dienende Belüftungsrillen 52 der Befestigungskomponente 22. Die Luft kann so aus dem Innenraum des Trinkbehälters 11 entweichen, falls sich die elastische Komponente 21 des Ausgleichskörpers 20 nicht hermetisch verschließend an die Innenwand 12 des Trinkbehälters 10 schmiegt. Die Strichpunktlinie deutet den Ausströmvorgang der Luft aus dem Innenraum 11 des Trinkbehälters 10 an.

In der Darstellung auf der rechten Seite oben ist bezugnehmend auf die mittlere Darstellung Detailansicht D ein Teil des Trinkgefäßes 1 im Schnitt dargestellt. Die Strichpunktlinie deutet den Ausströmvorgang der im Innenraum 11 des Trinkbehälters 10 befindlichen Luft über die Belüftungsrillen 52 der Befestigungskomponente 22 an. Der Ausgleichskörper 20, bestehend aus der Befestigungskomponente 22 und der elastischen Komponente 21, ist formschlüssig mit dem Mundrand 14 des Trinkbehälters 10 verbunden.

In der Darstellung auf der rechten Seite unten ist bezugnehmend auf die mittlere Darstellung Detailansicht F ein Teil des Trinkgefäßes 1 im Schnitt dargestellt. Hier ist thematisiert, dass sich die elastische Komponente 21 des Ausgleichskörpers 20, während des Befüllvorgangs nicht an die Innenwand 12 des Trinkbehälters 10 schmiegt. Somit sind wie in Fig. 14 dargestellte umlaufende Belüftungsrillen 51 oder wie in Fig. 15 dargestellte Belüftungsrillen 53 der Innenwand 12 des Trinkbehälters 10 nicht notwendig, um die Belüftung zu gewährleisten. Die Belüftungsrillen 52 der Befestigungskomponente 22 reichen hier für die Belüftung aus.

Ein erfindungsgemäß bevorzugt als Einsatz ausgebildeter Ausgleichskörper 20 hat zum Vorteil, dass dieser dem Absinken des Flüssigkeitspegels bzw. -standes S während des Trinkvorgangs entgegenwirkt, so dass ein Überstrecken des Halses der trinkenden Person ebenso wie damit häufig einhergehende Schluckstörungen vorteilhaft vermieden werden, und das Trinkgefäß 1 auch von alten und kranken Personen vollständig geleert werden kann.

### Bezugszeichenliste

- 1: Trinkgefäß

- 10: Trinkbehälter
- 11: Innenraum des Trinkbehälters 10
- 12: Innenwand des Trinkbehälters 10
- 13: Behälterboden des Trinkbehälters 10
- 14: Mundrand des Trinkbehälters 10

- 20: Ausgleichskörper, insbesondere als Einsatz ausgebildet
- 21: elastische Komponente des Ausgleichskörpers 20
- 22: Befestigungskomponente
- 23: bodenartige Komponente
- 24: wandartige Komponente
- 25: deckelartige Komponente
- 26: Randkomponente
- 27: Dicht- oder O-Ring

- 30: Deckelelement
- 31: Mundöffnung im Deckelelement 30
- 32: Deckelrand

- 40: Verschlusselement

- 50: Belüftungsvorrichtung
- 51: Belüftungsrillen
- 52: Belüftungsrillen der Befestigungskomponente
- 53: Belüftungsrillen der Innenwand 12 des Trinkbehälters 10
- 54: Belüftungsaussparung im Behälterboden 13 des Trinkbehälters 10
- 60: Sensor
- 61: elektronisches oder mechatronisches System
- 62: Sichtfenster im Behälterboden 13 des Trinkbehälters 10

- E: Eichmaß
- F: Gewichtskraft eines Flüssigkeitsvolumens
- S: Flüssigkeitsstand

## Patentansprüche

1. Trinkgefäß (1) zur Aufnahme einer zum Verzehr geeigneten Flüssigkeit, bestehend aus einem Trinkbehälter (10) mit einem Änderungen des Flüssigkeitsstandes (S) im Trinkbehälter (10) ausgleichenden Körper (20),
- wobei der Ausgleichskörper (20) eine elastische Komponente (21) umfasst, welche unter der Gewichtskraft (F) eines Flüssigkeitsvolumens seine Form vergrößert und bei Wegfall der einwirkenden Gewichtskraft (F) den Ausgleichskörper (20) in seine kleinere Ursprungsform zurückführt;
- und der Ausgleichskörper (20) zumindest aus der elastischen Komponente (21) und aus einer Befestigungskomponente (22) zur Halterung des Ausgleichskörpers (20) im Trinkbehälter (10) besteht,
**dadurch gekennzeichnet, dass**
- das Trinkgefäß (1) eine Belüftungsvorrichtung (50) aufweist,
- wobei die Belüftungsvorrichtung (50) einen durch den Ausgleichskörper (20) geschaffenen Innenraum (11) mit der Raumluft verbindet, sodass Luft in und aus dem Innenraum (11) strömen kann, sobald der Ausgleichskörper (20) seine Gestalt ändert,
- und wobei die Belüftungsvorrichtung (50) als
- lediglich auf der Innenwand (12) des Trinkbehälters (10) ausgestaltete Belüftungsrillen (53)
- und als Belüftungsrillen (52) der Befestigungskomponente (22) auf der Unterseite der Befestigungskomponente (22)
ausgebildet ist, wodurch die Luft im Innenraum (11) des Trinkbehälters (10) während des Befüll- und Trinkvorgangs über die Belüftungsrillen (52) der Befestigungskomponente (22) und über die Belüftungsrillen (53) der Innenwand (12) des Trinkbehälters (10) entweichen kann.

2. Trinkgefäß (1) nach Anspruch 1, **dadurch gekennzeichnet, dass** die elastische Komponente (21) des Ausgleichskörpers (20) eine von der Gewichtskraft des Flüssigkeitsvolumens abhängige Elastizität aufweist.

3. Trinkgefäß (1) nach Anspruch 1 oder 2, **dadurch gekennzeichnet, dass** der Ausgleichskörper (20) als Einsatz zum ganz oder teilweisen Einsetzen in den Trinkbehälter (10) ausgebildet ist.

4. Trinkgefäß (1) nach einem der vorherigen Ansprüche 1 bis 3, wobei die Elastizität der elastischen Komponente (21) bevorzugt durch die Elastizität des Materials selbst realisiert wird.

5. Trinkgefäß (1) nach einem der vorherigen Ansprüche, **dadurch gekennzeichnet, dass** der als Einsatz ausgebildete Ausgleichskörper (20) zumindest aus einer bundförmigen Befestigungskomponente (22), aus einer bodenartigen Komponente (5) und/oder einer wandartig-elastischen Komponente (24/21) besteht, wobei bevorzugt zusätzlich eine deckelartige Komponente (25) vorhanden sein kann, wobei bevorzugt die zuvor genannten Komponenten aus einem Material, aus verschiedenen Materialien oder aus einer Kombination verschiedener Materialien ausgebildet sein können.

6. Trinkgefäß (1) nach einem der vorherigen Ansprüche, **gekennzeichnet durch** im Trinkbehälter (10) an der Innenwand (12) beginnende und den Mundrand (14) übergreifend ausgebildete Belüftungsrillen (51).

7. Trinkgefäß (1) nach einem der vorherigen Ansprüche, **dadurch gekennzeichnet, dass** der Ausgleichskörper (20) rotationssymmetrisch ausgebildet ist.

8. Trinkgefäß (1) nach einem der vorherigen Ansprüche, wobei die Befestigungskomponente (22) bevorzugt durch einen umlaufenden ringförmigen Rand gebildet und/oder bevorzugt formschlüssig, kraftschlüssig oder stoffschlüssig mit dem Trinkbehälter (10) verbunden ist.

9. Trinkgefäß (1) nach einem der vorherigen Ansprüche, wobei die Befestigungskomponente (22) mit dem oberen Rand des Trinkbehälters (10) oder mit einem oberen Bereich der Innenwandung (12) des Trinkbehälters (10) verbunden ist.

10. Trinkgefäß (1) nach einem der vorangehenden Ansprüche, wobei die elastische Komponente (21), die Befestigungskomponente (22), die bodenartige Komponente (23), die wandartig-elastische Komponente (24/21) und/oder vorzugsweise auch die deckelartige Komponente (25) aus einem Material ausgebildet sind, so dass bevorzugt ein Ausgleichskörper (20) mit einer kondomartigen Struktur erhältlich ist.

11. Trinkgefäß (1) nach mindestens einem der vorangehenden Ansprüche, wobei der bevorzugt als Einsatz ausgebildete Ausgleichskörper (20) reibschlüssig, formschlüssig und/oder stoffschlüssig mit dem Trinkbehälter (10) verbunden ist.

12. Trinkgefäß (1) nach einem der vorherigen Ansprüche, **gekennzeichnet durch** ein Sensorelement (60) zur Berechnung sich verändernder Flüssigkeitsmengen.

13. Trinkgefäß (1) nach Anspruch 12, **dadurch gekennzeichnet, dass** das Sensorelement (60) Teil eines elektronischen bzw. mechatronischen Systems (61) ist.

14. Trinkgefäß (1) nach Anspruch 12 oder 13, **dadurch gekennzeichnet, dass** das Sensorelement (60) oder das dieses umfassende System (61) im Behälterboden (13) des Trinkbehälters (10) angeordnet ist.

15. Trinkgefäß (1) nach einem der vorherigen Ansprüche 12 bis 14, **dadurch gekennzeichnet, dass** das Sensorelement (60) ein Abstandsmesser auf Infrarotbasis ist.

## Claims

1. Drinking vessel (1) for receiving a liquid suitable for consumption, composed of a drink container (10) with a body (20) that compensates changes of the liquid level (S) in the drink container (10), wherein
- the compensating body (20) comprises an elastic component (21) which, under the weight force (F) of a liquid volume, enlarges its shape, and which, when the acting weight force (F) ceases, returns the compensating body (20) to its smaller original shape, and
- the compensating body (20) is composed at least of the elastic component (21) and of a fastening component (22) for retaining the compensating body (20) in the drink container (10),
**characterized in that** the drinking vessel (1) has a ventilation device (50),
- wherein the ventilation device (50) connects an interior (11), created by the compensating body (20), to the ambient air, such that air can flow into and out of the interior (11) as soon as the compensating body (20) changes its shape,
- and wherein the ventilation device (50) is designed as
- ventilation grooves (53) formed only on the inner wall (12) of the drink container (10)
- and as ventilation grooves (52) of the fastening component (22), on the underside of the fastening component (22),
as a result of which the air in the interior (11) of the drink container (10) can escape through the ventilation grooves (52) of the fastening component (22) and through the ventilation grooves (53) of the inner wall (12) of the drink container (10) during the filling process and drinking process.

2. Drinking vessel (1) according to Claim 1, **characterized in that** the elastic component (21) of the compensating body (20) has an elasticity that is dependent on the weight force of the liquid volume.

3. Drinking vessel (1) according to Claim 1 or 2, **characterized in that** the compensating body (20) is designed as an insert for complete or partial insertion into the drink container (10).

4. Drinking vessel (1) according to one of Claims 1 to 3, wherein the elasticity of the elastic component (21) is preferably realized by the elasticity of the material itself.

5. Drinking vessel (1) according to one of the preceding claims, **characterized in that** the compensating body (20) designed as an insert is composed at least of a collar-shaped fastening component (22), a floor-like component (5) and/or a wall-like elastic component (24/21), wherein a lid-like component (25) can preferably additionally be present, wherein the aforementioned components can preferably be made of one material, of different materials or of a combination of different materials.

6. Drinking vessel (1) according to one of the preceding claims, **characterized by** ventilation grooves (51) which begin on the inner wall (12) in the drink container (10) and engage over the mouth edge (14).

7. Drinking vessel (1) according to one of the preceding claims, **characterized in that** the compensating body (20) has a rotationally symmetrical design.

8. Drinking vessel (1) according to one of the preceding claims, wherein the fastening component (22) is preferably formed by a circumferential annular edge and/or is preferably connected to the drink container (10) by form-fit engagement, forcefit engagement or integral bonding.

9. Drinking vessel (1) according to one of the preceding claims, wherein the fastening component (22) is connected to the upper edge of the drink container (10) or is connected to an upper region of the inner wall (12) of the drink container (10).

10. Drinking vessel (1) according to one of the preceding claims, wherein the elastic component (21), the fastening component (22), the floor-like component (23), the wall-like elastic component (24/21) and/or preferably also the lid-like component (25) are made of one material, such that a compensating body (20) with a condom-like structure is preferably obtainable.

11. Drinking vessel (1) according to at least one of the preceding claims, wherein the compensating body (20) preferably designed as an insert is connected to the drink container (10) by frictional engagement, form-fit engagement and/or integral bonding.

12. Drinking vessel (1) according to one of the preceding claims, **characterized by** a sensor element (60) for calculating changing quantities of liquid.

13. Drinking vessel (1) according to Claim 12, **characterized in that** the sensor element (60) is part of an electronic or mechatronic system (61).

14. Drinking vessel (1) according to Claim 12 or 13, **characterized in that** the sensor element (60) or the system (61) comprising the latter is arranged in the container floor (13) of the drink container (10).

15. Drinking vessel (1) according to one of Claims 12 to 14, **characterized in that** the sensor element (60) is an infrared-based distance meter.

## Revendications

1. Récipient à boisson (1) destiné à recevoir un liquide propre à la consommation, ledit récipient à boisson comprenant un contenant à boisson (10) pourvu d'un corps (20) qui compense des variations du niveau de liquide (S) dans le contenant à boisson (10),
- le corps de compensation (20) comprenant un composant élastique (21) qui augmente la forme de celui-ci sous la force de poids (F) d'un volume de liquide et qui ramène le corps de compensation (20) à la forme d'origine plus petite de celui-ci lorsque la force de poids agissante (F) cesse ; et
- le corps de compensation (20) comprenant au moins le composant élastique (21) et un composant de fixation (22) destiné à maintenir le corps de compensation (20) dans le contenant à boisson (10), **caractérisé en ce que** le récipient à boisson (1) comporte un dispositif de ventilation (50),
- le dispositif de ventilation (50) reliant un espace intérieur (11), créé par le corps de compensation (20), à l'air ambiant de sorte que l'air puisse s'écouler dans et hors de l'espace intérieur (11) dès que le corps de compensation (20) change de forme,
- et le dispositif de ventilation (50) étant conçu sous la forme de
- rainures de ventilation (53) conçues uniquement sur la paroi intérieure (12) du contenant à boisson (10),
- et de rainures de ventilation (52) du composant de fixation (22) sur le côté inférieur du composant de fixation (22), ce qui permet à l'air se trouvant dans l'espace intérieur (11) du contenant à boisson (10) de s'échapper lors du processus de remplissage et de consommation par le biais des rainures de ventilation (52) du composant de fixation (22) et par le biais des rainures de ventilation (53) de la paroi intérieure (12) du contenant à boisson (10).

2. Récipient à boisson (1) selon la revendication 1, **caractérisé en ce que** le composant élastique (21) du corps de compensation (20) présente une élasticité qui dépend de la force de poids du volume de liquide.

3. Récipient à boisson (I) selon la revendication 1 ou 2, **caractérisé en ce que** le corps de compensation (20) est conçu sous la forme d'un insert destiné à être totalement ou partiellement inséré dans le contenant à boisson (10).

4. Récipient à boisson (1) selon l'une des revendications précédentes 1 à 3, l'élasticité du composant élastique (21) étant de préférence due à l'élasticité du matériau lui-même.

5. Récipient à boisson (1) selon l'une des revendications précédentes, **caractérisé en ce que** le corps de compensation (20), conçu sous la forme d'un insert, comprend au moins un composant de fixation en forme de collerette (22), un composant de type fond (5) et/ou un composant élastique de type couvercle (24/21), un composant de type couvercle (25) pouvant de préférence être prévu en plus, les composants susmentionnés pouvant de préférence être conçus en un seul matériau, en des matériaux différents ou en une combinaison de différents matériaux.

6. Récipient à boisson (1) selon l'une des revendications précédentes, **caractérisé par** des rainures de ventilation (51) qui sont conçues pour débuter au niveau de la paroi intérieure (12) dans le contenant à boisson (10) et pour s'étendre sur le bord d'embouchure (14) .

7. Récipient à boisson (1) selon l'une des revendications précédentes, **caractérisé en ce que** le corps de compensation (20) est conçu à symétrie de rotation.

8. Récipient à boisson (1) selon l'une des revendications précédentes, le composant de fixation (22) étant de préférence formé par un bord annulaire périphérique et/ou étant de préférence relié au contenant à boisson (10) par une liaison par complémentarité de formes, une liaison en force ou une liaison de matière.

9. Récipient à boisson (1) selon l'une des revendications précédentes, le composant de fixation (22) étant relié au bord supérieur du contenant à boisson (10) ou à une région supérieure de la paroi intérieure (12) du contenant à boisson (10).

10. Récipient à boisson (1) selon l'une des revendications précédentes, le composant élastique (21), le composant de fixation (22), le composant de type fond (23), le composant élastique de type paroi (24/21) et/ou de préférence également le composant de type couvercle (25) étant conçus en un seul matériau de façon à obtenir de préférence un corps de compensation (20) ayant une structure de type préservatif.

11. Récipient à boisson (1) selon l'une au moins des revendications précédentes, le corps de compensation (20), de préférence conçu sous la forme d'un insert, est relié au contenant à boisson (10) par une liaison à frottement, une liaison par complémentarité de formes et/ou une liaison de matière.

12. Récipient à boisson (1) selon l'une des revendications précédentes, **caractérisé par** un élément capteur (60) destiné à calculer des quantités de liquide variables.

13. Récipient à boisson (1) selon la revendication 12, **caractérisé en ce que** l'élément capteur (60) fait partie d'un système électronique ou mécatronique (61).

14. Récipient à boisson (1) selon la revendication 12 ou 13, **caractérisé en ce que** l'élément capteur (60) ou le système (61) comprenant celui-ci est disposé dans le fond (13) du contenant à boisson (10).

15. Récipient à boisson (1) selon l'une des revendications précédentes 12 à 14, **caractérisé en ce que** l'élément capteur (60) est un dispositif de mesure de distance à infrarouge.
